Europäisches Patentamt

European Patent Office

Office européen des brevets

(19)

(11) Veröffentlichungsnummer: **0 141 313**
**B1**

# (12) EUROPÄISCHE PATENTSCHRIFT

(45) Veröffentlichungstag der Patentschrift:
**15.07.87**

(51) Int. Cl.⁴: **C 23 G 1/36, C 23 F 1/46**

(21) Anmeldenummer: **84112260.9**

(22) Anmeldetag: **12.10.84**

(54) **Verfahren zur Aufbereitung von eisen- und zinkhaltigen Salzsäurebeizen.**

(30) Priorität: **21.10.83 DE 3338258**

(43) Veröffentlichungstag der Anmeldung:
**15.05.85 Patentblatt 85/20**

(45) Bekanntmachung des Hinweises auf die Patenterteilung:
**15.07.87 Patentblatt 87/29**

(84) Benannte Vertragsstaaten:
**AT BE CH DE FR GB IT LI LU NL SE**

(56) Entgegenhaltungen:
**WO - A - 81/00728**
**DE - A - 1 621 577**
**DE - A - 1 767 252**

(73) Patentinhaber: **HAMM CHEMIE GmbH, Wanheimer Strasse 429/431 Postfach 101683, D-4100 Duisburg 1 (DE)**

(72) Erfinder: **Gremm, Walter, Dipl.-Chem., Moselstrasse 20, D-4020 Mettmann (DE)**

## Beschreibung

Die Erfindung bezieht sich auf ein Verfahren zur Aufbereitung von eisen- und zinkhaltigen Salzsäurebeizen.

Metallische Bauteile aus Eisen und Stahl schützt man vor Korrosion durch Aufbringen dünner Schichten elektronegativerer Metalle, vorzugsweise Zink.

Zur Erzielung guter Haftfestigkeit zwischen Grund- und Überzugsmetall wird das Grundmetall sorgfältig in alkalischen und/oder sauren Lösungen vor dem nach verschiedenen Verfahren möglichen Aufbringen des Überzugsmetalls gereinigt. Es ist üblich, zu diesem Zweck z.B. Salzsäure in Konzentrationen zwischen 5-25% anzuwenden. Beim Beizprozess verbraucht sich die Salzsäure durch Inlösunggehen des Grundwerkstoffes Eisen wie auch des Überzugsmetalls, z.B. Zink. Die Wirksamkeit der Beize wird durch ständiges Nachschärfen mit konzentrierter Säure aufrechterhalten, bis zum Erreichen einer Grenzkonzentration der in Lösung gehenden Metalle. Bei Erreichen dieser Sättigungskonzentrationen wird die Altbeize verworfen und damit zu einem Entsorgungs- und Umweltproblem.

Verschiedene Verfahren zur Aufbereitung derartiger Abfallsäuren sind beschrieben worden. Gemäss FR-A-2 307 880 ist beispielsweise bekannt, zur Aufarbeitung von solchen Abfallsäuren zur Separierung von Eisenchlorid und Zinkchlorid die wässrige Phase mittels organophosphorhaltigen organischen Phasen, wie z.B. Tributylphosphat, zu extrahieren und das Zinkchlorid aus der organischen Phase zu reextrahieren, wobei zur besseren Trennung von Eisen und Zink eine vorgeschaltete Reduktion mittels metallischen Eisen vorgeschlagen wird, um vor der Extraktion das Eisen-III vollständig in die zweiwertige Form zu überführen.

Die bekannnten Verfahren sind entweder zu aufwendig und unwirtschaftlich oder im erreichten Ergebnis des Reinheitsgrades und damit der Verwendungsmöglichkeit der anfallenden Raffinatlösungen unbefriedigend.

Welche Endprodukte auch angestrebt werden, ein erfolgversprechendes Verfahren setzt in erster Linie die möglichst vollständige Trennung der in der Lösung befindlichen Metalle Eisen und Zink voneinander voraus mit dem Ziel, Produkte zu erhalten, die entweder in den Handel gebracht werden oder in anderer Weise wiederverwendet werden können. Im ersteren Falle muss durch das Verfahren ein hoher Anspruch an den Reinheitgrad der erzeugten Produkte erfüllt werden. Im anderen Fall wird z.B. bevorzugt vorgeschlagen, den Weg der Pyrohydrolyse zu beschreiten. Wegen des damit verbundenen hohen Energieaufwandes und aufwendiger, kostspieliger Technik zur Verhütung von Korrosionen in den dafür geeigneten Pyrolyse-Anlagen erscheint dieser Weg jedoch nicht mehr zeitgemäss.

Da also einerseits das Verfahren zu kommerziell leicht verwertbaren Handelsprodukten marktüblichen Reinheitsgrades führen soll, andererseits als Ausgangsmaterial vorzugsweise verbrauchte Beizen aus Feuerverzinkereinen zur Verfügung stehen, konnten für diesen Zweck die bekannten Verfahren nicht befriedigen.

Die in den Verzinkereien anfallenden Altsäuren enthalten ausser Eisen und Zink eine Reihe weiterer Schwermetalle als Neben- und Spurenelemente, die unerwünscht sind und entfernt werden müssen, wenn die Endprodukte sinnvoll genutzt werden sollen und einen handelsüblichen Reinheitsgrad besitzen sollen.

Aufgabe der Erfindung war daher die Schaffung eines Verfahrens zur Aufbereitung von eisen- und zinkhaltigen Salzsäurebeizen durch Flüssig-Flüssig-Extraktion, wobei zur Trennung von Eisen und Zink das in den Salzsäurebeizen in zwei- und dreiwertiger Form vorliegende Eisen durch vorgeschaltete Reduktion vollständig in zweiwertiges Eisen übergeführt wird, das Zink durch Komplexbildner enthaltende organische Lösungsmittel extrahiert und nach Reextraktion die Eisen und Zink enthaltenden Phasen in üblicher Weise aufbereitet werden, das eine verbesserte Aufarbeitung der Salzsäurebeizen und verbesserte Trennung von Eisen und Zink und eine Wiederverwendung der Metalle oder ihrer Verbindungen ermöglicht.

Die Aufgabe wird dadurch gelöst, dass die Reduktion des dreiwertigen Eisens in die zweiwertige Oxidationsstufe in zwei Stufen durch nacheinandergeschaltete Zugabe von metallischem Eisen und Zink erfolgt.

In der Atlsäure sind gewöhnlich neben Eisen und Zink die in diesen Metallen als Legierungs-, Neben- und Spurenelemente vorliegenden sonstigen Schwermetalle, vorzugsweise Mn, Pb, Sn, Cu, Cd, As, Sb, Bi in entsprechenden Mengenverhältnissen gelöst. Für eine sinnvolle Verwendung bzw. Weiterverarbeitung der anfallenden Raffinatlösungen Eisenchlorid bzw. Zinkchlorid stellen sie unerwünschte und hinderliche Verunreinigungen dar. Entsprechend ihrer Neigung zur Bildung von Chlorokomplexen verteilen sie sich bei der Extraktion vollständig oder teilweise auf die eine oder andere Raffinatlösung. Es ist darum erwünscht, die genannten Metalle möglichst vor der Flüssig-Flüssig-Extraktion aus der Lösung zu entfernen. Dies wird vorteilhaft durch das erfindungsgemäss bevorzugte 2stufige Zementationsverfahren erreicht, bei dem die Zugabe von Eisen und Zink in der Weise erfolgt, dass in einer ersten Stufe durch gesteuerte Zugabe von metallischem Eisen ein pH-Wert von etwa 3 eingestellt wird und in einer zweiten Stufe metallisches Zink in ausreichender Menge zugesetzt wird, um in der Lösung noch enthaltene Schwermetalle auszufällen.

Die Behandlung mit metallischem Eisen in der ersten Stufe erfüllt gleichzeitig mehrere Funktionen. Zunächst wird die restliche freie HCl bis auf einen pH-Wert von ca. 3 abgebaut. Dies ist der Arbeits-pH-Wert der anschliessenden Zinkzementation. Gleichzeitig wird in der Lösung befindliches 3wertiges Eisen zur 2wertigen Stufe reduziert. Dieser Vorgang ist wichtig für die Selektivität der folgenden Flüssig-Flüssig-Extraktion, da, im Gegensatz zu $Fe^{3+}$, $Fe^{2+}$ keine Chlorokomplexe bildet, die wie Zink vom Extraktionsmittel aufgenommen werden.

Ausserdem erfolgt durch die Eisenzugabe die erste Phase der Zementation für die in der elektrochemischen Spannungsreihe positiveren Elemente Kupfer,

2

Arsen, Antimon und Wismut sowie Teilmengen an Blei.

Die noch verbliebenen Schwermetalle Zinn und Cadmium sowie die überwiegende Menge an Blei werden in der anschliessenden zweiten Zementationsstufe durch Behandeln mit Zinkstaub als Metallschlamm ausgefällt.

In vorteilhafter Ausgestaltung des erfindungsgemässen Verfahrens wird die Zementation durchgeführt, indem man die Altsäure in der ersten Stufe über eine mit Eisenspänen gefüllte Kolonne leitet und als zweite Zementationsstufe in einem Reaktionsbehälter der Altsäure Zinkstaub zufügt, so dass die nach der ersten Stufe in der Lösung verbliebenen Metalle als Schlamm ausgefällt werden, der sich im Sumpf des Reaktionsbehälters angesammelt und in üblicher Weise ausgetragen werden kann.

Die erwünschte Reaktion der Altsäure mit den Eisenspänen verläuft in befriedigender Weise schon bei Raumtemperatur, doch kann eine Anhebung der Temperatur um bis zu max. 30 °C unter Umständen vorteilhaft sein bei erhöhtem Säuredurchfluss. In der nachfolgenden Zinkstaubbehandlung verbessert die Anwendung dieser leicht erhöhten Arbeitstemperatur den Wirkungsgrad der Zementation geringfügig.

Vorteilhaft werden alle Apparateteile der Anlage von der Zinkzementation beginnend bis einschliesslich zur Waschstufe nach der Extraktion unter vollständigem Luftabschluss durch Aufbau einer Inertgasatmosphäre gehalten, um eine Rückoxidation von zweiwertigem Eisen zur dreiwertigen Stufe sicher zu verhindern. Wird dies nicht beachtet, so besteht die Gefahr einer Rücklösung vor allem des auszementierten Cadmiums und gleichzeitig eines Verlustes an Selektivität der Eisen/Zink-Trennung im Extraktionsteil der Anlage.

Die möglichst vollständige Trennung zwischen Eisen und Zink durch die Extraktion des Zinks aus der wässrigen Phase wird beeinflusst durch eine mehr oder minder starke Aufnahme von wässriger Phase in die organische Phase. Dieser Emulsionsbildung und dem damit verbundenen Eisentransfer ist durch geeignete Zusammensetzung des Extraktionsmittels und der wässrigen Lösung entgegenzuwirken.

Die Verwendung organophosphorhaltiger Extraktionsmittel, wie z.B. Tributylphosphat, ist möglich, doch werden bei Einsatz langkettiger aliphatischer Amine günstigere Ergebnisse erzielt. Als ein besonders geeignetes Extraktionsmittel wurde Trioctylamin bevorzugt. Die Konzentration an Amin liegt am günstigsten zwischen 20 bis 30% Vol. Als Verdünnungsmittel dient das üblicherweise in der Solvent-Extraktion eingesetzte Kerosin. Ein Produkt mit hohem Aliphatenanteil, wie z.B. Escaid® 110, ist gut geeignet in einem Mischungsverhältnis von 75 bis 65% Vol. Zur Vermeidung von Dreiphasenbildung können die bekannten Modifier verwendet werden. Das Extraktionsmittelgemisch liefert in einem Temperaturbereich zwischen 20 bis 40 °C gleichbleibend gute Extraktionsergebnisse. Auch zur Reextraktion ist die Anwendung erhöhter Temperaturen nicht erforderlich.

In der praktischen Anwendung werden den Säurebeizen Inhibitoren und Emulgatoren zugefügt. Es handelt sich in der Regel um organische Stoffe, die in der Lage sind, den Säureangriff auf den Grundwerkstoff zu bremsen, Rost und Zunder jedoch bevorzugt in Lösung gehen zu lassen. Die Emulgatoren sollen von den Werkstücken abgelöste Öl- und Fettreste in der Säure emulgieren, damit diese nicht auf der Beizbadoberfläche schwimmen und sich beim Ausfahren der behandelten Teile auf deren Oberfläche filmartig verteilen.

Es wurde nun gefunden, dass sich die Anwesenheit solcher Inhibitoren und Emulgatoren nachteilig auf Teilschritte bei Anwendung fester und/oder flüssiger Ionenaustauscher auswirkt. Vorzugsweise ist daher in dem erfindungsgemässen Verfahren eine Vorbehandlung der Altsäure mit Adsorptionsmitteln, vorzugsweise Aktivkohle, vorgesehen. Die Überwachung der Wirksamkeit, der Aufnahmefähigkeit und der Erschöpfung der Aktivkohle kann dabei durch Messung der Oberflächenspannung vor und nach der Behandlung der Altsäure sichergestellt werden.

Es empfiehlt sich, die organische Phase über eine der Extraktion nachgeschaltete mechanische Trennhilfe zu leiten; die hierbei praktisch vollständig abgetrennten Reste wässriger Phase werden zur Ausgangslösung zurückgeführt. Um ein Zinkchloridraffinat mit möglichst hohem Reinheitsgrad zu erreichen, so dass es z.B. für eine Elektrolyse geeignet ist, wird die organische Phase vor der Reextraktion gewaschen. Dabei wird das zur Verwendung gelangende Waschwasser zweckmässig ständig im Kreis geführt. Damit an dieser Stelle nicht bereits die Reextraktion von Zinkchlorid einsetzt, verwendet man erfindungsgemäss als Waschlösung vorteilhafterweise eine verdünnte Zinkchloridlösung, die sich im Gleichgewichtszustand mit der organischen Phase befindet. Gleichzeitig gelingt es aber, damit eventuell noch in der organischen Phase enthaltenes restliches Eisen zu entfernen. Dieses wird in einem in den Waschkreislauf geschalteten Rührbehälter mit basischen Zinkverbindungen, z.B. Zinkoxid, als Eisenhydroxid gefällt, wobei gleichzeitig die Zinkchloridlösung aufgefrischt und nach Filtration in den Kreislauf zurückgeführt wird.

Es steht nach der Reextraktion eine Zinkchloridlösung mit hohem Reinheitsgrad zur Verfügung, die in üblicher Weise verwendet werden kann. Sie kann z.B. einer Zinkchloridelektrolyse unterworfen werden, die zur Abscheidung von Zinkmetall eines Reinheitsgrades von 99,99% mit guter Duktilität und hellem Aussehen bei sehr glatter, knospen- und porenfreier Oberfläche führt.

Die Zusammensetzung der Altbeizen weist üblicherweise folgende Bandbreite auf:

| | | |
|---|---|---|
| 1. frei HCl ca. | | 10-150 g/l |
| 2. Eisen gesamt | | 50-150 g/l |
| 3. Zn + NE-Metall | | 0-150 g/l. |

Für den Ablauf des erfindungsgemässen Verfahrens wird ein möglichst einheitlicher Durchschnittswert der Zusammensetzung eingestellt. Dieser liegt bei

| | | |
|---|---|---|
| 1. freie HCl ca. | | 50 g/l |
| 2. Eisen zweiwertig ca. | | 120 g/l |
| 3. Eisen dreiwertig ca. | | 10 g/l |
| 4. Zink ca. | | 60 g/l. |

Die erfindungsgemäss von Zink befreite Eisen-II-chloridlösung enthält nach Verlassen der Flüssig-Flüssig-Extraktion Restkonzentrationen an Zink in der Grössenordnung von ca. 300 ml/g. Damit ist die Verwendung des Produktes nach Oxidation zu $Fe^{3+}$ für verschiedene Einsatzzwecke (z.B. als Ätzlösung) möglich. Ist als Ziel jedoch eine Eisen-III-chloridlösung zu gewinnen, die auch als Konditionierungsmittel in der Wasseraufbereitung geeignet ist, so ist der Restzinkgehalt auf Werte unter 1 mg/l zu senken.

Das kann beispielsweise dadurch erreicht werden, dass der 3stufigen Flüssig-Flüssig-Extraktion ein harzförmiger Festbettionenaustauscher nachgeschaltet ist. Die auf diese Weise praktisch vollständig von Zink befreite Eisen-II-chloridlösung kann anschliessend mit den üblichen Oxidationsmitteln zur 3wertigen Stufe oxidiert werden, z.B. unter Verwendung des bei der Zinkchloridelektrolyse anodisch entstehenden Gemisches aus Luft und Chlorgas.

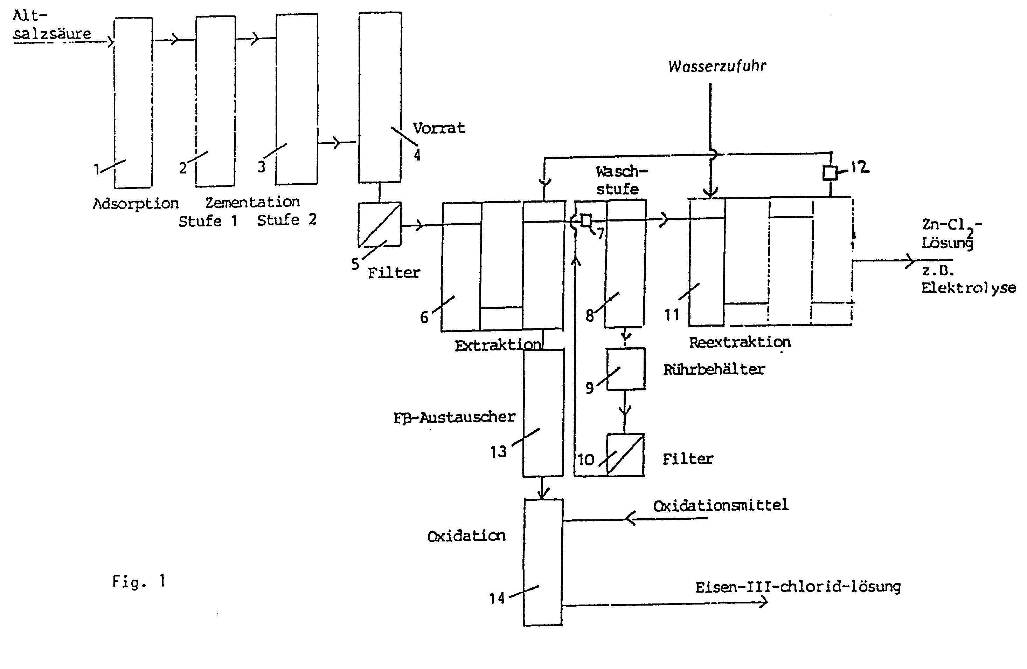

Ablauf und Vorteile des erfindungsgemässen Verfahrens werden im folgenden im einzelnen dargelegt, wobei auf die Verfahrensschritte im Fliessschema (Fig. 1) Bezug genommen wird.

Die mit Eisen, Zink und NE-Metallen beladene Altsalzsäure wird zunächst zur Entfernung organischer Inhaltsstoffe, wie etwa Inhibitoren und Emulgatoren, kontinuierlich über eine Festbettaktivkohle-Reinigung (1) geführt. Dabei werden z.B. Inhibitoren, die in der nachfolgenden ersten Zementationsstufe zu Störungen führen, als auch Emulgatoren, deren Vorhandensein den Ablauf der Flüssig-Flüssig-Extraktion beeinträchtigt, sicher zurückgehalten. Anschliessend gelangt die auf 20-45°C temperierte Lösung in die zweistufige Zementation. Die erste Stufe besteht aus einer mit Eisenspänen/-Granulat gefüllten Kolonne (2). Durch den Kontakt der Altsäure mit metallischem Eisen in dieser Kolonne wird die Acidität der Salzsäure bis auf den für die folgende zweite Stufe erforderlichen Arbeits-pH-Wert von 3 abgebaut. Gleichzeitig wird eventuell vorhandenes $Fe^{3+}$ zu $Fe^{2+}$ reduziert.

In dieser ersten Zementationsstufe werden einige NE-Metalle ganz oder teilweise in metallischer Form auszementiert. Die vollständige Entfernung der restlichen toxischen Schwermetalle erfolgt dann in der zweiten Zementationsstufe. Im Rührbehälter (3) dieser Stufe wird der Lösung chargenweise Zinkstaub zugefügt. Das entstehende Schwermetallzementat wird aus dem Rührbehälter ausgetragen, die behandelte Lösung im Pufferbehälter (4) bevorratet und von hier über einen Filter (5) aus kontinuierlich der Flüssig-Flüssig-Extraktion zugeführt. Der gesamte Anlagenbereich mit den Anlagenteilen 4-8 wird mit einer Inertgasatmosphäre beaufschlagt, um eine Oxidation von $Fe^{2+}$ zu $Fe^{3+}$ zu verhindern. In einer mehrstufigen Mixer-Settlerkolonne (6) wird das Zinkchlorid aus der eisenhaltigen Lösung extrahiert. Dies geschieht durch Anwendung einer organischen Phase aus TOA in einem Kerosin/Isodekanol-Gemisch. Da dieses Gemisch sehr leicht zu Emulsionsbildungen neigt, wird diese organische Phase nach Verlassen des letzten Settlers der Extraktion über einen Phasentrennapparat (7) geführt. Ein derartiger Apparat entspricht im Aufbau einem Settler mit einer im Zulaufbereich befindlichen Trennkerze aus Kunststoffgewebe. Die auf diese Weise praktisch vollständig von wässriger Phase befreite organische Phase wird dann in einem Mixer-Settler (8) einem Waschprozess unterzogen. Auf diese Weise gelingt es, den Eisengehalt im Zinkchlorid-Raffinat auf die Grössenordnung von ca. 3 mg/l zu begrenzen. Als Waschwasser verwendet man eine verdünnte Zinkchloridlösung, die nach Verlassen des Mixer-Settlers (8) in einem Rührbehälter (9) zur Fällung des aufgenommenen Eisens mit Zinkchlorid vermischt wird und nach Passieren des Filters (10) erneut in den Mixer-Settler (8) zurückgeführt wird.

Die weitere Behandlung der zinkbeladenen organischen Phase erfolgt durch Reextraktion in den Mixer-Settler (11). Die von Zink entladene organische Phase wird über einen wie früher beschriebenen Phasentrennapparat (12) fast vollständig von wässriger Phase befreit und danach auf die Mixer-Settler (6) zur erneuten Zinkextraktion zurückgeführt.

Das wässrige Zinkchlorid-Raffinat wird in üblicher Weise aufbereitet. Führt man damit z.B. eine Zinkchloridelektrolyse durch, so gelingt die Abscheidung eines Elektrolytzinks mit einem Reinheitsgrad von 99,9%. Bei dieser Elektrolyse entstehendes Chlorgas kann in der Füllkörperkolonne (14) als Oxidationsmittel für das im Mixer-Settler (6) anfallende Eisen-II-chlorid eingesetzt werden.

Die im Mixer-Settler (6) von der Hauptmenge Zink befreite Eisen-II-chloridlösung wird über eine Anionaustauscher-Kolonne (13) geführt. Auf diese Weise wird der Zinkgehalt der Lösung auf Werte unter 1 mg/l gesenkt. In der Füllkörperkolonne (14) wird die Eisen-II-chloridlösung durch Zufuhr von gasförmigen Oxidationsmitteln zu Eisen-III-chloridlösung oxidiert, die z.B. als Flockungsmittel in der Wasseraufbereitung Verwendung finden kann.

*Anwendungsbeispiel*

Zur Anwendung gelangt z.B. eine Altsalzsäure folgender Zusammensetzung:

freie HCl 39,7 g/l  
$Fe^{2+}$ 107,4 g/l  
$Fe^{3+}$ 6,6 g/l  
Zn 47,9 g/l, Pb 403 mg/l, Sn 51,8 mg/l, Cd 38,2 mg/l  
Oberflächenspannung 0,062 N/m.

Durch die Behandlung in der zweistufigen Zementation zeigten sich anschliessend nachstehende Werte:

freie HCl 0,05 g/l  
$Fe^{2+}$ 144,3 g/l  
$Fe^{3+}$ n. n.  
Zn 47,7 g/l, Pb 3,2 mg/l, Sn 2 mg/l, Cd 1,3 mg/l  
Oberflächenspannung 0,083 N/m.

Diese Lösung wurde einer dreistufigen Extraktion mit nachgeschaltetem FB-Anionenaustauscher unterzogen und hatte danach einen Restzinkgehalt von 0,5 mg/l. Die zinkbeladene organische Phase wurde mit Wasser extrahiert. Das anfallende zinkchloridhaltige Raffinat enthielt 23,8 g/l Zink.

Aus 1000 l Altsäure wurden durch Anwendung des Verfahrens gewonnen

47,5 kg Zink und
965,0 l 41,9%ige Eisen-III-chloridlösung.

**Patentansprüche**

1. Verfahren zur Aufbereitung von eisen- und zinkhaltigen Salzsäurebeizen durch Flüssig-Flüssig-Extraktion, wobei zur Trennung von Eisen und Zink das in den Salzsäurebeizen in zwei- und dreiwertiger Form vorliegende Eisen durch vorgeschaltete Reduktion vollständig in zweiwertiges Eisen übergeführt wird, das Zink durch Komplexbildner enthaltende organische Lösungsmittel extrahiert und nach Reextraktion die Eisen und Zink enthaltenden Phasen in üblicher Weise aufbereitet werden, dadurch gekennzeichnet, dass die Reduktion des dreiwertigen Eisens in die zweiwertige Oxidationsstufe in zwei Stufen durch nacheinandergeschaltete Zugabe von metallischem Eisen und Zink erfolgt.

2. Verfahren nach Anspruch 1, dadurch gekennzeichnet, dass die Zugabe von Eisen und Zink in der Weise erfolgt, dass in einer ersten Stufe durch gesteuerte Zugabe von metallischem Eisen ein pH-Wert von etwa 3 eingestellt wird und in einer zweiten Stufe metallisches Zink in ausreichender Menge zugesetzt wird, um in der Lösung noch enthaltene Schwermetalle auszufällen.

3. Verfahren gemäss den Ansprüchen 1 oder 2, dadurch gekennzeichnet, dass die Reduktion des dreiwertigen Eisens und die Extraktionsstufe unter Inertgas betrieben werden.

4. Verfahren gemäss einem oder mehreren der Ansprüche 1 bis 3, dadurch gekennzeichnet, dass man die Salzsäurebeize vor der Aufarbeitung mit Adsorptionsmitteln behandelt.

5. Verfahren gemäss einem oder mehreren der Ansprüche 1 bis 4, dadurch gekennzeichnet, dass der Extraktionsstufe eine Wäsche der organischen Phase mittels einer verdünnten $ZnCl_2$-Lösung nachgeschaltet ist.

6. Verfahren gemäss Anspruch 5, dadurch gekennzeichnet, dass die verwendete $ZnCl_2$-Lösung im Kreislauf geführt wird und durch Ausfällung des aufgenommenen Eisens mittels ZnO regeneriert wird.

**Claims**

1. Process for the treatment of hydrochloric acid pickles containing iron and zinc by means of liquid-liquid extraction, in which, in order to separate iron and zinc, the iron present in the hydrochloric acid pickles in divalent and trivalent form is converted completely into divalent iron by means of preliminary reduction, the zinc is extracted using organic solvents containing compex-forming agents, and, after re-extraction, the phases containing iron and zinc are treated in customary manner, characterised in that the reduction of trivalent iron to the divalent oxidation state is carried out in two stages by the successive addition of metallic iron and metallic zinc.

2. Process according to claim 1, characterised in that the addition of iron and zinc is effected as follows: in a first stage, a pH of approximately 3 is established by the controlled addition of metallic iron and, in a second stage, metallic zinc is added in an amount that is sufficient to precipitate any heavy metals still contained in the solution.

3. Process according to claim 1 or 2, characterised in that the reduction of trivalent iron and the extraction stage are carried out under inert gas.

4. Process according to one or more of claims 1 to 3, characterised in that the hydrochloric acid pickle is treated with adsorption agents before being worked up.

5. Process according to one or more of claims 1 to 4, characterised in that the extraction stage is followed by washing of the organic phase by means of a dilute $ZnCl_2$ solution.

6. Process according to claim 5, characterised in that the $ZnCl_2$ solution used is recycled and is regenerated by precipitation of the absorbed iron by means of ZnO.

**Revendications**

1. Procédé pour traiter, par extraction liquide-liquide, des décapants chlorhydriques contenant du fer et du zinc, selon lequel, pour séparer le fet et le zinc, on fait entièrement passer à l'état de fer divalent, par une réduction préliminaire, le fer présent sous forme divalente et trivalente dans les décapants chlorhydriques, on extrait le zinc à l'aide de solvants organiques contenant des générateurs de complexes et, après réextraction, on traite de façon usuelle les phases contenant du fer et du zinc, procédé caractérisé en ce que la réduction faisant passer le fer trivalent au degré d'oxydation 2 est exécutée en deux étapes par addition successive de fer métallique et de zinc.

2. Procédé selon la revendication 1, caractérisé en ce qu'on effectue l'addition de fer et de zinc de manière que, dans une première étape, par addition réglée de fer métallique, on ajuste à un pH d'environ 3 et, dans une seconde étape, on ajoute du zinc métallique en une quantité suffisante pour précipiter les métaux lourds encore contenus dans la solution.

3. Procédé selon les revendications 1 ou 2, caractérisé en ce qu'on effectue sous gaz inerte la réduction du fer trivalent et l'étape d'extraction.

4. Procédé selon une ou plusieurs des revendications 1 à 3, caractérisé en ce que, avant le traitement de préparation, on traite le décapant chlorhydrique par des agents d'adsorption.

5. Procédé selon une ou plusieurs des revendications 1 à 4, caractérisé en ce qu'un lavage de la phase organique à l'aide d'une solution diluée de $ZnCl_2$ est placé après l'étape d'extraction.

6. Procédé selon la revendication 5, caractérisé en ce qu'on recycle la solution de $ZnCl_2$ utilisée et on la régénère en précipitant à l'aide de ZnO le fer dont elle était chargée.

Altsalzsäure

Wasserzufuhr

Vorrat

4

Adsorption   Zementation
Stufe 1   Stufe 2

Waschstufe

12

5 Filter

7

Zn-Cl$_2$-
Lösung

z.B.
Elektrolyse

6

8

11

Extraktion

Reextraktion

Rührbehälter

9

FB-Austauscher

13

10   Filter

Oxidationsmittel

Oxidation

14

Eisen-III-chlorid-lösung

Fig. 1